# EUROPEAN PATENT SPECIFICATION

(11) **EP 3 517 318 B1**
(45) Date of publication and mention of the grant of the patent: **04.11.2020**
(21) Application number: 17852693.5
(22) Date of filing: 28.07.2017
(51) Int. Cl.: B60C 9/22, B60C 9/28, B60C 9/20

(54) **TIRE**
REIFEN
PNEU

(30) Priority: 23.09.2016 JP 2016185528
(43) Date of publication of application: 31.07.2019
(73) Proprietor: Bridgestone Corporation, Tokyo 104-8340 (JP)
(72) Inventor: MITA, Keiichi, Tokyo 104-8340 (JP)
(74) Representative: Oxley, Robin John George
(86) International application number: PCT/JP2017/027511
(87) International publication number: WO 2018/055912

(56) References cited:
- DE-A1-102013 104 524
- JP-A- 2000 158 909
- JP-A- 2005 193 865
- JP-A- 2007 137 172
- JP-A- 2007 276 691
- JP-A- 2009 073 245
- JP-A- 2010 143 390
- JP-A- 2011 235 832
- US-A1- 2015 059 941
- US-A1- 2016 263 948

## Description

### Technical Field

The present invention relates to a tire with a plurality of belt layers outside a carcass in a tire radial direction.

### Background Art

A tire has various advantages compared to a metal wheel and is superior to the metal wheel, for example in noise level, acceleration, deceleration and riding comfort. Accordingly, the tire is used in not only for an automobile but also for a new traffic vehicle (in subway, mono-rail, new traffic system, etc.). Moreover, conventionally, a pneumatic tire, as the tire used in the new traffic vehicle, has been known in which a plurality of belt layers with steel cords are arranged in a tread part (see Patent Literature 1).

However, in the conventional tire described in the Patent Literature 1, a tread rubber is directly overlapped and arranged on the belt layers, therefore, there is room for improvement from a viewpoint of more reliable protection for the plurality of belt layers. Moreover, for example in a tire for the new traffic vehicle, uneven wear or chunk (braking, peeling) is likely to be caused in the tread rubber, and the tread rubber is worn during travelling. The tire may be exchanged according to a state of the tread rubber. However, if the tire is used until wear of the tread rubber is reached the belt layer, the belt layer (for example the end of the belt layer) would be exposed. Even in such a case, it is necessary to suppress exposure of the belt layer to protect the belt layer.

In the new traffic vehicle travelling along rail, if the tire is travelled while the belt layer is exposed, steel cords in the belt layer would come into contact with the rail. As a result, heat is generated in the belt layer by a friction between the steel cord and the rail. Therefore, in the new traffic vehicle travelling on the rail, it is required to suppress exposure of the belt layer and avoid a contact between the belt layer and the rail, to reduce a temperature rise etc. of the tire.

### Citation List

### Patent Literature

PTL 1: Japanese Patent Laid-Open No. H10-16511 Attention is also drawn to the disclosures of US2015/059941 and DE10 2013 104524.

### Summary of Invention

### Technical Problem

The present invention has been made in view of the above-described conventional problems and an object is to protect the plurality of belt layers so that exposure of the belt layers is suppressed.

### Solution to Problem

The present invention is a tire comprising: a carcass arranged between a pair of bead parts, a plurality of belt layers including a circumferential belt layer with a cord extending along a tire circumferential direction and arranged outside the carcass in a tire radial direction, at least one protective layer with an organic fiber cord extending along the tire circumferential direction and arranged outside the plurality of belt layers in the tire radial direction and in the tire width direction, and a tread rubber arranged outside the protective layer in the tire radial direction. The circumferential belt layer is provided at least at the outermost side in the tire radial direction in the plurality of belt layers. An end of the protective layer is arranged on the inner side in the tire radial direction than the plurality of belt layers, in a region outer in the tire width direction than an outermost end of the plurality of belt layers located at the outermost side in the tire width direction wherein the cord of the circumferential belt layer is a wave-shaped cord meanderingly extending along the tire circumference direction.

### Advantageous Effects of Invention

According to the present invention, the plurality of belt layers of the tire is protected so that exposure of the belt layers can be suppressed.

### Brief Description of Drawings

Fig.1 is a sectional view of a tire of a present embodiment.
Fig.2 is a plain view of the tire of the present embodiment.
Fig.3 is a sectional view of the tire showing an enlarged X-part in Fig.1.

### Description of Embodiments

An embodiment of a tire of the present invention will be described with reference to the drawings.

The tire of the embodiment is a tire for main wheel of a new traffic vehicle and is used to the tire travelling type of the new traffic vehicle. Moreover, gas is filled in the tire and inner pressure of the tire is adjusted to a prescribed pressure. Here, the tire is a nitrogen filled tire in which gaseous nitrogen is filled.

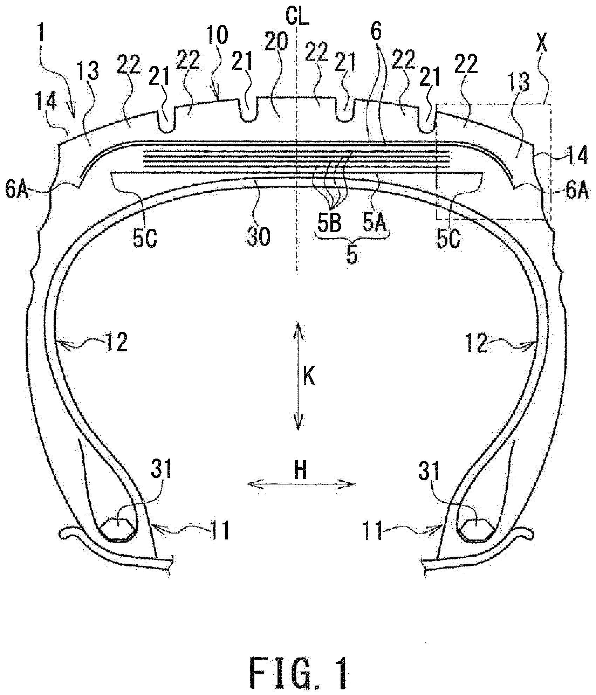

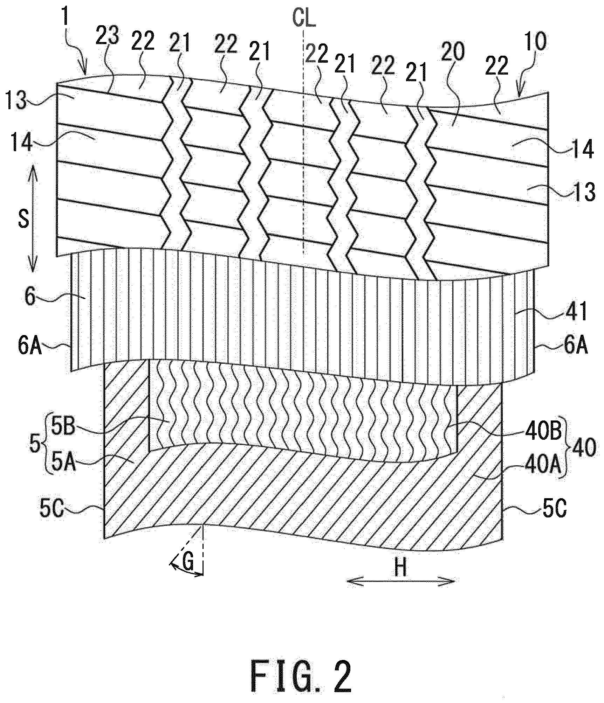

Fig.1 is a sectional view of a tire 1 of the present embodiment schematically showing a structure of the tire cut along a tire width direction H. Fig.2 is a plain view of the tire 1 of the present embodiment showing a tread part 10 of the tire 1 viewed from an outside in a tire radial direction K. Fig.2 shows a tread pattern of the tread part 10 as well as an inner structure of the tread part10 which is schematically shown.

As shown, the tire 1 is provided with the tread part 10 in contact with a track of line (here, rail), a pair of bead parts 11 arranged inside the tread part 10 in the tire radial direction K, and a pair of side wall parts 12 each arranged between an end of the tread part 10 and the bead part 11. Tire equator CL is located at a center part of the tread part 10 in the tire width direction H. Moreover, the tire 1 is provided with a tread rubber 20, a carcass 30 arranged between the pair of bead parts 11, bead cores 31 arranged in the bead parts 11, a plurality of belt layers 5 (5A, 5B) arranged in the tread part 10, and at least one protective layer 6 arranged between the belt layers 5 and the tread rubber 20.

The tread rubber 20 is a part of the tread part 10 (outer peripheral part) in contact with the rail and arranged outside of the protective layer 6 in the tire radial direction K. A predetermined tread pattern is formed on the tread rubber 20 of the tread part 10. The tire 1 is provided with a plurality of main grooves 21 formed in a zig zag shape, a plurality of land parts 22 extending in a tire circumferential direction S, and a plurality of sipes 23 formed in each land part 22.

The plurality of the main grooves 21 are circumferential grooves extending in the tire circumferential direction S and formed at intervals in the tire width direction H. The plurality of the land parts 22 are convex parts and divided by the plurality of the main grooves 21. The plurality of sipes 23 are formed at a predetermined interval in the tire circumferential direction S such that they extend in the tire width direction H while being inclined at a same angle each other to the tire width direction H.

The carcass 30 has a plurality of cords extending along the radial direction and is toroidally arranged between the bead cores 31 of the pair of bead parts 11. Moreover, the carcass 30 is folded back around the bead core 31, passed through the inner side of the bead core 31 in the tire radial direction K and arranged outwardly in the tire radial direction K. The bead core 31 is annularly formed and arranged inside of the carcass 30 folded back in the bead part 11.

The plurality of belt layers 5 have a plurality of cords 40 (40A, 40B) and are arranged outside the carcass 30 in the tire radial direction K. The cords 40 are metal cords formed of metal and are arranged in parallel in each belt layer 5. The plurality of belt layers 5 include at least one inclined belt layer 5A, at least one circumferential belt layer 5B and are arranged to be overlapped in the tire radial direction K. The inclined belt layer 5A has cords 40A extending with inclination (inclined cord) to the tire circumferential direction S and the circumferential belt layer 5B has cords 40B extending along the tire circumferential direction S (circumferential cords).

The inclined belt layer 5A is provided at least at the innermost side in the tire radial direction K in the plurality of belt layers 5. The cords 40A of the inclined belt layer 5A are at the angle of 45 to 55 degrees (see inclined angle G) to the tire circumferential direction S and arranged in parallel with inclination to the tire circumferential direction S. The circumferential belt layer 5B is provided at least at the outermost side in the tire radial direction K in the plurality of belt layers 5. The cords 40B of the circumferential belt layer 5B are at the angle of 0 to 5 degrees (0 ± 5 degrees) to the tire circumferential direction S and arranged in parallel while extending along the tire circumferential direction S. The angle of the cord 40 is an angle between an extending direction of the cord 40 and the tire circumferential direction S.

The tire 1 is provided with at least four belt layers 5 comprised of the inclined belt layer 5A and the circumferential belt layer 5B as the plurality of belt layers 5. Here, the plurality of belt layers 5 are comprised of one inclined belt layer 5A arranged outside the carcass 30 in the tire radial direction K and four circumferential belt layers 5B arranged outside the inclined belt layer 5A in the tire radial direction K. The inclined belt layer 5A is provided inside in the tire radial direction K in the plurality of belt layers 5 and arranged between the carcass 30 and the circumferential belt layer 5B. The circumferential belt layer 5B is provided outside in the tire radial direction K in the plurality of belt layers 5 and arranged between the inclined belt layer 5A and the protective layer 6.

A width of the inclined belt layer 5A in the tire width direction H is wider than a width of the circumferential belt layer 5B in the tire width direction H. Therefore, the inclined belt layer 5A is arranged to outwardly extend over the circumferential belt layer 5B in the tire width direction H. Ends of the inclined belt layer 5A located at both outsides in the tire width direction H are the outermost ends 5C of the plurality of belt layers 5 in the tire width direction H and arranged on the outer side in the tire width direction H than the ends of the circumferential belt layer 5B. The outermost ends 5C of the plurality of belt layers 5 are located at the outermost positions in the tire width direction H among the ends of the plurality of belt layers 5.

The cord 40 of the belt layer 5 is a steel cord formed of steel. Moreover, the cord 40A of the inclined belt layer 5A is a strait cord linearly extending to a direction inclined to the tire circumferential direction S. The cord 40B of the circumferential belt layer 5B is a wave-shaped cord meanderingly extending along the tire circumferential direction S, and spirally arranged along the tire circumferential direction S. An extending direction of the cord 40B is a direction to a center line of vibration (amplitude) of the cord 40B, and the center line of the cord 40B extends along the tire circumferential direction S. The cord 40B extends along the tire circumferential direction S as a whole while meandering in a wave shape.

The protective layer 6 has a plurality of organic fiber cords 41 (circumferential cord) extending along the tire circumferential direction S, and is arranged outside the plurality of belt layers 5 in the tire radial direction K and in the tire width direction H. The organic fiber cords 41 are cords formed of organic fibers and are arranged in parallel in the protective layer 6. The protective layer 6 covers whole the plurality of belt layers 5 from the outside in the tire radial direction K and from the outside in the tire width direction H to protect the plurality of belt layers 5. Here, the tire 1 is provided with two protective layers 6 arranged to be overlapped with the circumferential belt layers 5B. The two protective layers 6 are arranged to be overlapped with each other in the tire radial direction K.

The organic fiber cord 41 of the protective layer 6 is a nylon fiber cord formed of nylon fiber (here, nylon 6,6 fiber) . Moreover, the organic fiber cords 41 are at the angle of 0 to 5 degrees (0 ± 5 degrees) to the tire circumferential direction S and arranged in parallel while extending along the tire circumferential direction S. An angle of the organic fiber cord 41 is an angle between an extending direction of the organic fiber cord 41 and the tire circumferential direction S. The organic fiber cord 41 is a strait cord extending linearly along the tire circumferential direction S and spirally arranged along the tire circumferential direction S. To suppress distortion due to difference in cord angle to tire circumferential direction S between the belt layers 5 and the protective layers 6, the protective layers 6 (cord angle:0 to 5 degrees) are arranged outside the outermost circumferential belt layer 5B (cord angle:0 to 5 degrees) in the tire radial direction K.

A width of the protective layers 6 in the tire width direction H is wider than a width of the plurality of belt layers 5 in the tire width direction H. Therefore, the protective layers 6 are arranged to outwardly extend over the plurality of belt layers 5 in the tire width direction H. Ends 6A of protective layer 6 located at both outsides in the tire width direction H are arranged on the outer side in the tire width direction H than the outermost ends 5c of the plurality of belt layers 5 and arranged in an outer region 13 of the tread part 10. The outer region 13 is a region outer than the outermost end 5C in the tire width direction H. In the outer side in the tire width direction H than the circumferential belt layer 5B, the protective layers 6 are curved inwardly in the tire radial direction K and gradually shifted inwardly in the tire radial direction K. Moreover, in the outer region 13, the ends 6A of the protective layers 6 are arranged on the inner side in the tire radial direction K than the plurality of belt layers 5 and the outermost ends 5c.

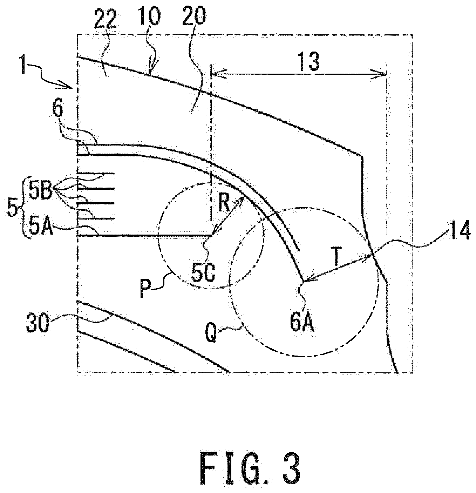

Fig.3 is a sectional view of the tire 1 showing an enlarged X-part in Fig.1.

As shown, the outermost end 5C of the plurality of belt layers 5 is arranged at a location spaced apart the protective layer 6. The shortest distance R between the outermost end 5C and the protective layer 6 is 2mm to 13mm (2≤R≤13). In the section of the tire 1 in the tire width direction H, when a minimum circle P which has its center at the outermost end 5C and contacts with the protective layer 6 is set, the radius of the circle P is the shortest distance R.

When the shortest distance R is less than 2mm (R<2), distortion of rubber would become large between the outermost end 5 C and the protective layer 6, which would likely to effect on a separation-resistance performance at the outermost end 5C. Whereas, when the shortest distance R is over 13mm (13<R), the protective layer 6 approaches to an outer surface 14 of tire 1 and it would be feared that sufficient thickness of the tread rubber 20 between the protective layer 6 and the outer surface 14 could not be obtained. As a result, if the tread rubber 20 is affected by shallow flaws, cracks would likely to be progressed between the tread rubber 20 and the protective layer 6 and to cause a separation. When the shortest distance R is 2mm to 13mm, distortion of rubber would be suppressed from becoming large and the separation-resistance performance at the outermost end 5C would be surely maintained. Furthermore, sufficient thickness of the tread rubber 20 between the protective layer 6 and the outer surface 14 would be maintained, thus occurrence of separation could be suppressed.

The end 6A of the protective layer 6 is arranged at a location spaced apart the outer surface 14 of the tire 1. The shortest distance T between the end 6A of the protective layer 6 and the outer surface 14 of the tire 1 is 5mm to 15mm (5≤T≤15). In the section of the tire 1 in the tire width direction H, when a minimum circle Q which has its center at the end 6A of the protective layer 6 and contacts with the outer surface 14 of the tire 1 is set, the radius of the circle Q is the shortest distance T.

When the shortest distance T is less than 5mm (T<5), when the tread rubber 20 is damaged by chunk, etc., the end 6A of the protective layer 6 is easily exposed. Whereas, when the shortest distance T is over 15mm (15<T), the end 6A of the protective layer 6 approaches to the carcass 30 and it would be feared that sufficient thickness of rubber between the end 6A of the protective layer 6 and carcass 30 could not be obtained. As a result, distortion of rubber between the end 6A of the protective layer 6 and the carcass 30 would become large, it is feared that the separation would be occurred. When the shortest distance T is 5mm to 15mm, even if the tread rubber 20 is damaged, the end 6A of the protective layer 6 is hard to be exposed. Furthermore, sufficient thickness of rubber between the end 6A of the protective layer 6 and carcass 30 would be maintained, thus occurrence of separation could be suppressed.

According to the tire 1 described above, the plurality of belt layers 5 can be protected by the protective layer 6 arranged to cover the belt layers 5. Moreover, the separation of the belt layers 5 can also be suppressed by the protective layer 6. Even if the tread rubber 20 is damaged by uneven wear or chunk, etc., exposure of the belt layers 5 can be suppressed by the protective layer 6. By exposure of the protective layer 6, it is possible to recognize a state of the tread rubber 20 and request to exchange the tire 1. Even if the protective layer 6 comes into contact with the rail, since the cord of the protective layer 6 is the organic fiber cord 41, heat generation due to a friction between the protective layer 6 and rail can be reduced and a temperature rise of the tire 1 can be suppressed.

Since the organic fiber cord 41 of the protective layer 6 extends along the tire circumferential direction S, an end of the organic fiber cord 41 is easily arranged at a position other than the end 6A of the protective layer 6. As a result, the end 6A of the protective layer 6 becomes hardly separable, thus occurrence of separation at the end 6A could be suppressed. The circumferential belt layers 5B are provided at the outermost side in the tire radial direction K in the plurality of the belt layers 5, and the circumferential belt layer 5B and the protective layer 6 are arranged to be overlapped with each other. Moreover, the cord 40B of the circumferential belt layer 5B extends along the tire circumferential direction S like the organic fiber cord 41 of the protective layer 6. Accordingly, during rolling of the tire 1, difference in movements of the protective layer 6 and the circumferential belt layer 5B can be decreased and distortion of rubber between the protective layer 6 and the circumferential belt layer 5B can be reduced.

In addition, a plurality of inclined belt layers 5A may be provided in the plurality of belt layers 5. Moreover, one circumferential belt layer 5B may be provided in the plurality of belt layers 5, and a plurality of circumferential belt layers 5B (for example, two layers or three layers) may be provided in the plurality of belt layers 5. The plurality of circumferential belt layers 5B are arranged to be overlapped with each other in tire radial direction K between the inclined belt layer 5A and the protective layer 6.

The tire 1 may be provided with one protective layer 6, the tire 1 may be provided with the plurality of protective layers 6. When the protective layer 6 is comprised of one layer, the end 6A of the protective layer 6 is an end of one protective layer 6 located outside in the tire width direction H. When the protective layer 6 is comprised of the plurality of layers, the end 6A of the protective layer 6 is an end of the stacked plurality of protective layers 6 located outside in the tire width direction H.

The organic fiber cord 41 of the protective layer 6 may be formed of organic fiber (for example, polyester fiber, rayon fiber, aramid fiber) other than nylon fiber. The protective layer 6 may be bended inwardly in the tire radial direction K in the outer region 13. In this case, a bending position of the protective layer 6 is located at the outer side in the tire width direction H than the outermost side 5C of the belt layers 5.

### Reference Signs List

- 1: tire
- 5: belt layer
- 6: protective layer
- 10: tread part
- 11: bead part
- 12: side wall part
- 13: outer region
- 14: outer surface
- 20: tread rubber
- 21: main groove
- 22: land
- 23: sipe
- 30: carcass
- 31: bead core
- 40: cord
- 41: organic fiber cord

## Claims

1. A tire (1) comprising:
a carcass (30) arranged between a pair of bead parts (11);
a plurality of belt layers (5) including a circumferential belt layer with a cord (40B) extending along a tire circumferential direction (S) and arranged outside the carcass (30) in a tire radial direction (K);
at least one protective layer (6) with an organic fiber cord (41) extending along the tire circumferential direction (S) and arranged outside the plurality of belt layers (5) in the tire radial direction (K) and in the tire width direction (H); and
a tread rubber (20) arranged outside the protective layer (6) in the tire radial direction (K); wherein
the circumferential belt layer is provided at least at the outermost side in the tire radial direction in the plurality of belt layers, **characterized in that**
an end (6A) of the protective layer (6) is arranged on the inner side in the tire radial direction (K) than the plurality of belt layers (5), in a region outer in the tire width direction (H) than an outermost end of the plurality of belt layers (5) located at the outermost side in the tire width direction (H), and **in that**
the cord (40B) of the circumferential belt layer (5) is a wave-shaped cord meanderingly extending along the tire circumference direction (S) .

2. The tire (1) according to claim 1, wherein
the shortest distance (R) between the outermost end of the plurality of belt layers (5) and the protective layer (6) is 2mm to 13mm.

3. The tire (1) according to claim 1 or 2, wherein
the shortest distance (T) between the end (6A) of the protective layer (6) and an outer surface (14) of the tire (1) is 5mm to 15mm.

## Patentansprüche

1. Reifen (1), der Folgendes umfasst:
eine Karkasse (30), die zwischen einem Paar von Wulstteilen (11) angeordnet ist,
eine Vielzahl von Gürtellagen (5), die eine umlaufende Gürtellage mit einem Kord (40B), der sich entlang einer Reifenumfangsrichtung (S) erstreckt und in einer Reifenradialrichtung (K) außerhalb der Karkasse (30) angeordnet ist, einschließen,
mindestens eine Schutzlage (6) mit einem Kord (41) aus organischer Faser, der sich entlang der Reifenumfangsrichtung (S) erstreckt und in der Reifenradialrichtung (K) und in der Reifenbreitenrichtung (H) außerhalb der Vielzahl von Gürtellagen (5) angeordnet ist, und
einen Laufflächengummi (20), der in der Reifenradialrichtung (K) außerhalb der Schutzlage (6) angeordnet ist, wobei
die umlaufende Gürtellage mindestens an der in der Reifenradialrichtung äußersten Seite in der Vielzahl von Gürtellagen bereitgestellt wird, **dadurch gekennzeichnet, dass**
ein Ende (6A) der Schutzlage (6) auf der in der Reifenradialrichtung (K) inneren Lage als die Vielzahl von Gürtellagen (5), in einem Bereich, in der Reifenbreitenrichtung (H) außen als ein äußerstes Ende der Vielzahl von Gürtellagen (5), angeordnet an der in der Reifenbreitenrichtung (H) äußersten Seite, angeordnet ist, und dadurch, dass
der Kord (40B) der umlaufenden Gürtellage (5) ein wellenförmiger Kord ist, der sich mäandernd entlang der Reifenumfangsrichtung (S) erstreckt.

2. Reifen (1) nach Anspruch 1, wobei
die kürzeste Entfernung (R) zwischen dem äußersten Ende der Vielzahl von Gürtellagen (5) und der Schutzlage (6) 2 mm bis 13 mm beträgt.

3. Reifen (1) nach Anspruch 1 oder 2, wobei
die kürzeste Entfernung (T) zwischen dem Ende (6A) der Schutzlage (6) und einer Außenfläche (14) des Reifens (1) 5 mm bis 15 mm beträgt.

## Revendications

1. Bandage pneumatique (1), comprenant :
une carcasse (30) agencée entre une paire de parties de talon (11) ;
une pluralité de couches de ceinture (5) incluant une couche de ceinture circonférentielle comportant un câblé (40B) s'étendant le long d'une direction circonférentielle du bandage pneumatique (S) et agencée à l'extérieur de la carcasse (30), dans une direction radiale du bandage pneumatique (K) ;
au moins une couche de protection (6) comportant un câblé de fibres organiques (41) s'étendant le long de la direction circonférentielle du bandage pneumatique (S) et agencée à l'extérieur de la pluralité de couches de ceinture (5), dans la direction radiale du bandage pneumatique (K) et dans la direction de la largeur du bandage pneumatique (H) ; et
une gomme de bande de roulement (20) agencée à l'extérieur de la couche de protection (6), dans la direction radiale du bandage pneumatique (K) ; dans lequel :
la couche de ceinture circonférentielle est agencée au moins au niveau du côté externe extrême, dans la direction radiale du bandage pneumatique, dans la pluralité de couches de ceinture ; **caractérisé en ce que** :
une extrémité (6A) de la couche de protection (6) est agencée sur le côté interne, dans la direction radiale du bandage pneumatique (K) que la pluralité de couches de ceinture (5), dans une région extérieure, dans la direction de la largeur du bandage pneumatique (H), qu'une extrémité externe extrême de la pluralité de couches de ceinture (5) situées au niveau du côté externe extrême, dans la direction de la largeur du bandage pneumatique (H) ; et **en ce que** :
le câblé (40B) de la couche de ceinture circonférentielle (5) est un câblé en forme d'onde s'étendant en méandres le long de la direction circonférentielle du bandage pneumatique (S).

2. Bandage pneumatique (1) selon la revendication 1, dans lequel
la distance la plus courte (R) entre l'extrémité externe extrême de la pluralité de couches de ceinture (5) et la couche de protection (6) est comprise entre 2 mm et 13 mm.

3. Bandage pneumatique (1) selon la revendication 1 ou 2, dans lequel
la distance la plus courte (T) entre l'extrémité (6A) de la couche de protection (6) et une surface externe (14) du bandage pneumatique (1) est comprise entre 5 mm et 15 mm.
